# EUROPÄISCHE PATENTSCHRIFT

(11) **EP 1 703 996 B1**
(45) Veröffentlichungstag und Bekanntmachung des Hinweises auf die Patenterteilung: **17.10.2007**
(21) Anmeldenummer: 04802824.5
(22) Anmeldetag: 25.11.2004
(51) Int. Cl.: B07C 5/34, G01N 23/04

(54) **VORRICHTUNG UND VERFAHREN ZUR TRENNUNG VON SCHÜTTGÜTERN**
DEVICE AND METHOD FOR SEPARATING BULK MATERIALS
DISPOSITIF ET PROCEDE POUR SEPARER DES MATIERES EN VRAC

(30) Priorität: 12.01.2004 DE 102004001790
(43) Veröffentlichungstag der Anmeldung: 27.09.2006
(73) Patentinhaber: CommoDaS® GmbH, 22880 Wedel (DE)
(72) Erfinder: PETZOLD, Guenther, 25462 Rellingen (DE); HARBECK, Hartmut, 22880 Wedel (DE); REISCHMANN, Gerd, 25436 Tornesch (DE)
(74) Vertreter: Biehl, Christian
(86) Internationale Anmeldenummer: PCT/DE2004/002615
(87) Internationale Veröffentlichungsnummer: WO 2005/065848

(56) Entgegenhaltungen:
- EP-A- 0 341 094
- WO-A-03/046533
- GB-A- 2 285 506
- US-A- 5 339 962

## Beschreibung

Die Erfindung betrifft eine Vorrichtung und ein Verfahren zur Trennung von Schüttgütern.

Vorrichtungen zur Trennung von Schüttgütern setzen eine Vielzahl von Sensoren voraus, insbesondere optische und elektromagnetische Sensoren, wie beispielsweise in der EP B1 - 1 253 981 der Anmelderin beschrieben.

Neben derartigen Sensoren ist vorteilhaft, auch Röntgenstrahlung zur nicht-destruktiven Untersuchung von Materialeigenschaften aller möglichen Objekte zu verwenden, die an der Oberfläche nicht ohne weiteres erfassbar sind.

Hierzu gibt die US 6,122,343 nur die im einleitenden Teil des Anspruches 1 angeführte Information, wobei allein der Hinweis, daß übereinanderliegende Arrays als Sensormittel Verwendung finden können, einen Hinweis darauf gibt, wie die Filter an den Detektoren aussehen können. Die Datenverarbeitung wird nicht näher erläutert, es wird lediglich ein Bild mit erhöhtem Kontrast als Ergebnis angestrebt.

Insbesondere durch die Beobachtung eines hochauflösenden Bildes unter Betrachtung zweier Röntgenstrahlungsenergieniveaus und die rechnerische Auswertung eines sich ergebenden Differenzbildes lassen sich Informationen über die Inhaltsstoffe einzelner Schüttgutpartikel gewinnen. Hierzu lehrt die US 6,122,343 nichts.

Beispielsweise ist dies von Interesse bei der Trennung von Erzen, wo die Entscheidung ob ein Teilchen verworfen wird oder nicht, entscheidend davon abhängt ob, und ggf. welches Metall in einem bestimmten Schüttgutteilchen vorhanden ist. Bei der Trennung von Abfallpartikeln kann das Verfahren ebenfalls eingesetzt werden.

In bisher bekannten Vorrichtungen, bei denen Röntgenquellen eingesetzt wurden, ergaben sich durch die nicht unbeträchtlichen räumlichen Abmessungen der Röntgenquellen und auch der Detektoren sowie die notwendige Abschirmung räumliche Erfordernisse, die eine ortsgenaue Auswertung, wie sie für die Ansteuerung von Ausblasdüsen zum Ausblasen auch kleinerer Schüttgutteilchen notwendig sind, nicht oder nur sehr aufwendig realisieren ließen.

GB-A-2 285 506 offenbart eine Vorrichtung und ein Verfahren mit einer Röntgenquelle mit Filtereinrichtungen, die vor wenigstens einem Sensormittel angeordnet sind.

Aufgabe der Erfindung ist nun, eine platzsparende Anordnung zu schaffen, mit der auch kleine Metallteile, wie Schrauben und Muttern nicht nur sicher erkannt, sondern auch mittels dem Beobachtungsort unmittelbar nachgeordneter Ausblasdüsen sicher vom übrigen Schüttgutstrom getrennt werden können.

Erfindungsgemäß wird dies durch die Merkmale des Hauptanspruches gelöst, wobei durch zwei Röntgenfilter für unterschiedliche Energieniveaus, die jeweils vor die Sensoren gebracht werden, unterschiedliche Information über die Schüttgutteilchen gewonnen werden kann. Alternativ können die Filter auch direkt der Röntgenquelle nachgeordnet werden, oder Röntgenquellen mit unterschiedlichen abgestrahlten Energien Verwendung finden.

Die räumliche Anordnung der Filter kann dabei fest sein, so dass durch die Bewegung der Schüttgutteilchen eine geeignete, den Filtern nachgeschaltete Spiegelung der Röntgenstrahlung beispielsweise durch Kristalle auf eine Detektorzeile bei einer Zuordnung zweier zu unterschiedlichen Zeiten aufgenommener Messergebnisse für die selben sich auf dem Schüttgutförderband fortbewegenden Schüttgutteilchen möglich ist.

In einer anderen Variante der Vorrichtung kann jedoch auch mit zwei Sensoren, die einander nachgeordnet quer zur Erstreckung des Förderbandes beispielsweise unter diesem angeordnet sind, gearbeitet werden. Durch geeignete rechnerische Verzögerungsschleifen lassen sich dann die nacheinander gewonnenen Bildinformationen einzelnen Schüttgutteilchen zuordnen und entsprechend nach rechnerischer Auswertung zur Ansteuerung der Ausblasdüsen nutzen.

Es ist aber auch möglich, dass von einer Röntgenquelle, die in einem breiteren Spektrum abstrahlt, durch Vorsetzen von Filtern die Röntgenstrahlung auf ein bestimmtes Energieniveau eingeschränkt wird, bevor sie das Schüttgutteilchen trifft. Zwischen den Schüttgutteilchen und einem nachgeordneten Sensor ist dann kein weiterer Filter notwendig.

Weiter wird vorgeschlagen, die Vorrichtung mit einer Abschirmung zu versehen, die selbstverständlich um die Röntgenquelle und den Ort der Bestrahlung der Schüttgutteilchen und die Sensoren herum röntgendicht vorgesehen ist, jedoch weiter auch auf der Oberfläche des Schüttgutförderbandes sich bis zu einer über eine schräge Schütte das Förderband befüllenden Befülleinrichtung hin erstreckt. Auf diese Weise ist sichergestellt, dass sich rund um die Sortier- und Trenneinrichtung Bedienpersonal aufhalten kann. Abdeckhauben sind so zu sichern, dass bei einer Entfernung die Vorrichtung nicht betrieben werden kann.

Das erfindungsgemäße Verfahren zur Trennung von Schüttgütern mit Hilfe einer Ausblaseinrichtung arbeitet mit an einer einem Förderband nachgeordneten Fallstrecke angeordneten Ausblasdüsen, wobei die Ausblasdüsen von rechnergestützten Auswertemitteln in Abhängigkeit von Sensorergebnissen einer, den Schüttgutstrom auf dem Förderband durchdringenden, aus einer Röntgenquelle emittierten und in Sensormitteln aufgefangenen Strahlung gesteuert werden.

Ein Filtern der die Schüttgutteilchen passierten Röntgenstrahlung erfolgt in wenigstens zwei unterschiedlichen Spektren zum ortsaufgelösten Auffangen der die Schüttgutteilchen passierenden Röntgenstrahlung in wenigstens einem Zeilensensor integriert über einen vorbestimmten Energiebereich. Dies kann bei Nutzung eines Sensormittels (einer langen aus vielen Einzeldetektoren aufgebauten Zeile) durch passieren verschiedener Filter und nacheinander Auffangen der transmittierten Strahlung, oder - bevorzugt durch zwei Sensorzeilen mit je einem anderen Filter erfolgen, wobei die Filter unterschiedliche Spektren durchlassen, die einmal eher weichen, einmal eher harten Charakter haben.

Eine Z-Klassifizierung und Normierung von Bildbereichen erfolgt zur Bestimmung der atomaren Dichteklasse aufgrund der Sensorsignale der in den wenigstens zwei Sensorzeilen aufgefangenen Röntgenphotonen unterschiedlicher Energiespektren.

Schließlich ist das Ziel über eine Segmentierung der Eigenschaftsklassenbildung zur Steuerung der Ausblasdüsen auf der Grundlage sowohl der erfassten mittleren Transmission der Schüttgutteilchen in den durch die wenigstens zwei Sensorzeilen aufgefangenen unterschiedlicher Röntgenenergiespektren als auch der durch eine Z-Normierung gewonnenen Dichteinformation vorteilhaft erreichbar.

Weitere Vorteile und Merkmale der Erfindung ergeben sich aus nachfolgender Beschreibung eines bevorzugten Ausführungsbeispiels anhand der beigefügten Zeichnung. Dabei zeigt:
- Fig. 1: die erfindungsgemäße Vorrichtung in einer schematischen Darstellung von der Seite,
- Fig. 2: die erfindungsgemäße Vorrichtung in perspektivischer Darstellung mit abgenommenem Strahlungsschutz oberhalb des Förderbandes, und
- Fig. 3: eine schematische Darstellung des Aufbaus der Röntgensensorik, und
- Fig. 4: eine schematische Darstellung des Aufbaus der Röntgensignalverarbeitung.

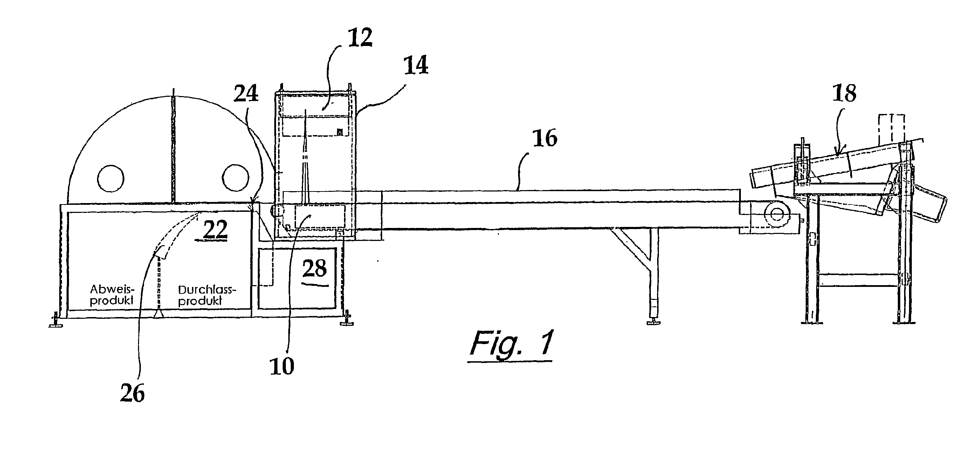

In **Fig. 1** ist anhand eines schematisch angedeuteten Flachdetektors 10, der unterhalb des Förderbands 20 angeordnet ist, und einer darüber befindlichen Röntgenquelle 12 schematisch ersichtlich, wie durch nachgeschaltete Ausblasdüsen 24 in zwei verschiedene Produktkammern ein Abweisprodukt von einem Durchlassprodukt aus dem Schüttgutstrom abgetrennt werden kann. Ein keilartiges Trennelement 26 zwischen den beiden Produktströmen kann in seiner Neigung verstellt werden, so dass an unterschiedlich schwere Produkte mit unterschiedlichen Flugeigenschaften eine leichte Anpassung möglich ist, ohne dass der Druck der Ausblasluft nachgestellt werden müsste.

Da sich bei metallischen Teilen, die ausgeblasen werden, ganz erhebliche Anforderungen an gleichmäßige Luftzufuhr ergeben, andererseits jedoch teilweise erhebliche Luftmengen gleichzeitig abgegeben werden, wird vorgeschlagen, mit einem Zwischenspeicher 28 jeweils ein größeres Druckluftvolumen zwischenzuspeichern, das an die Ausblasdüsen angeschlossen ist. Eine kontinuierlich arbeitende Druckluftpumpe wird zur Nachförderung von Druckluft an dieses Volumen eingesetzt.

In der Fig. 1 ist weiter erkennbar, wie sich oberhalb des Förderbandes 20 eine Abdeckung 16 befindet, die verhindert, dass gegen die Produktförderrichtung reflektierte Röntgenstrahlung zur Trenneinrichtung austritt. Durch eine schräg stehende Materialaufgabeschütte 18 auf das Förderband 20 ist zudem ein Abschluss des Förderbandkastens 16 befüllseitig vorgesehen, so dass auch gegen die Transportrichtung parallel zum Förderband eine Strahlung nicht austreten kann.

Die Vorrichtung zur Trennung von Schüttgütern mit Hilfe einer Ausblaseinrichtung mit an einer einem Förderband 20 nachgeordneten Fallstrecke 22 angeordneten Ausblasdüsen 24, besteht also im wesentlichen aus rechnergestützten Auswertemitteln, die in Abhängigkeit von Sensorergebnissen zweier aufgefangener, den Schüttgutstrom auf dem Förderband durchdringenden, aus einer Röntgenquelle 12 emittierten und in Sensormitteln 10 aufgefangenen Röntgendurchlichtbildern ansteuerbar sind, wobei zwei Filtereinrichtungen (nicht dargestellt) zur Weiterleitung von Röntgenstrahlung in Relation zueinander unterschiedlicher Energien, die vor dem wenigstens einen Sensormittel angeordnet sind, und wobei die Sensormittel 10 Zeilensensoren mit einer Vielzahl von quer zu dem Förderband 20 angeordneten einzelnen Pixeln sind. Dabei kann insbesondere zu jedem Filter eine Sensorzeile vorgesehen werden.

Eine der Breite des Förderbandes entsprechende Sensorzeile wird dabei durch aneinandergereihte Photodiodenarrays, deren aktive Fläche mit einem fluoreszierenden Papier bedeckt ist, gebildet werden. Die Filter können im bevorzugten Ausführungsfall Metallfolien sein, durch die Röntgenstrahlung zueinander unterschiedlicher Energieniveaus transmittiert wird. Die Filter können jedoch auch durch Kristalle gebildet werden, die Röntgenstrahlung zueinander unterschiedlicher Energieniveaus reflektieren, insbesondere die Röntgenstrahlung in unterschiedlicher Energiebereichen in unterschiedlichen Raumwinkeln reflektieren.

Es können ohne weiteres auch mehr als zwei Filter zur Nutzung von mehr als zwei Energieniveaus vorgesehen werden. Vorteilhafterweise werden die Filter unterhalb des Transportbandes 10 vor den Sensormitteln 10 angeordnet, und eine ein Bremsspektrum erzeugende Röntgenröhre 12 wird oberhalb des Förderbandes 20 angeordnet sein.

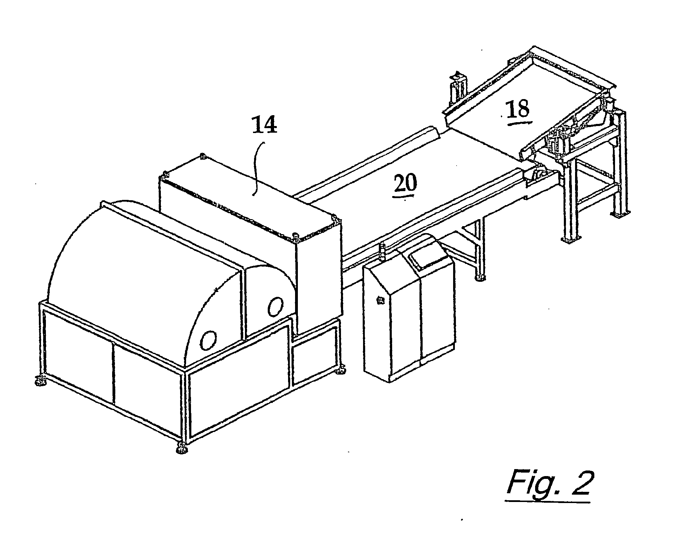

Die Vorrichtung ist mit einem Abschirmkasten 14, 16 im wesentlichen oberhalb des Förderbandes versehen, der das Förderband und die Ausblasstrecke 22 umgibt, und weiter als Abdeckung 16 das Förderband eine Strecke vor der Röntgenquelle abdeckt, wobei am Beginn des Laufbands eine schräge Schütte 18 den Eingangsquerschnitt verdeckt (**Fig. 2** zeigt dies perspektivisch). In der dargestellten Vorrichtung wird u.a. Glaskeramik von Flaschenglas getrennt. Aber auch die bei Bildschirmröhren verwendeten unterschiedlichen Glassorten, die teilweise erheblich höhere Schmelzpunkte als "normales Glas" aufweisen, sind ein beim Glasrecycling von Bruchglas bisher ein nur schwierig abzutrennendes Material, das nun erstmals mit der erfindungsgemäßen Vorrichtung abgetrennt werden kann.

Weiter wird für das Verständnis des Trennverfahrens eine technische Beschreibung der Röntgensignalverarbeitung mittels zweier Röntgentransmissionsspektren und einer Segmentierung in Eigenschaftsklassen im folgenden skizziert. Dabei ist zunächst im Rahmen der Röntgensensorik für eine geeignete Erfassung zu sorgen. Dies wird durch eine Filtertechnik mit spektraler Auflösung erreicht.

Durch eine geeignete Filterung der Röntgenstrahlung vor dem jeweiligen Sensor des zweikanalig ausgeführten Systems entsteht zunächst eine spektrale Selektivität. Die Anordnung der Sensorzeilen erlaubt dann eine unabhängige Filterung, so dass die optimale Selektivität für eine gegebenen Trennaufgabe erzielt werden kann.

Im allgemeinen wird ein Spektrum höherer Energie und ein Spektrum niedrigerer Energie erfaßt. Dazu wird für ersteres ein Hochpassfilter verwendet, das die niedrigeren Frequenzen mit geringerem Energieinhalt stark bedämpft. Die hohen Frequenzen werden mit geringer Dämpfung durchgelassen. Zu diesem Zweck kann insbesondere eine Metallfolie aus einem Metall mit höherer Dichteklasse, wie z.B. eine 0,45 mm dicke Kupferfolie dienen.

Bei dem Spektrum geringerer Energie ist das Filter vor dem betreffenden Sensor als Absorptionsfilter eingesetzt, das eine bestimmten Wellenbereich höherer Energie unterdrückt. Er wird so ausgelegt, dass die Absorption in nächster Nachbarschaft zu den Elementen höherer Dichte liegt. Zu diesem Zweck kann insbesondere eine Metallfolie aus einem Metall mit niedrigerer Dichteklasse, wie z.B. eine 0,45 mm dicke Aluminiumfolie dienen.

Jede der zwei Sensorzeilen S 1.i und S2.i (i z.B. von n mal 1 bis n mal 64 für alle n aneinandergereihten Arrays über die Förderbreite) besteht dabei aus einer Anzahl Photodiodenarrays, die mit einem Szintillator zur Wandlung der Röntgenstrahlung in sichtbares Licht versehen sind.

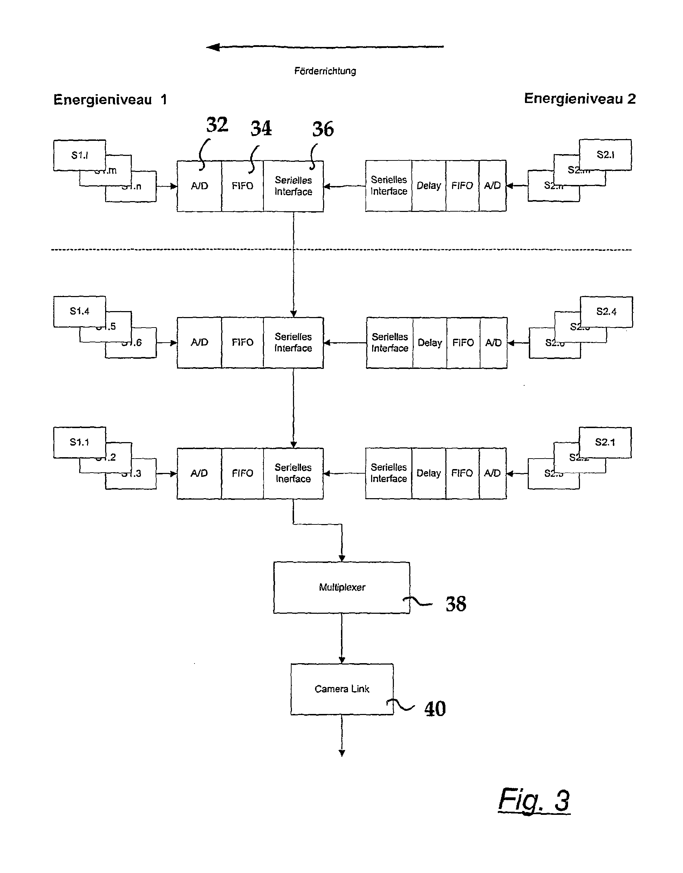

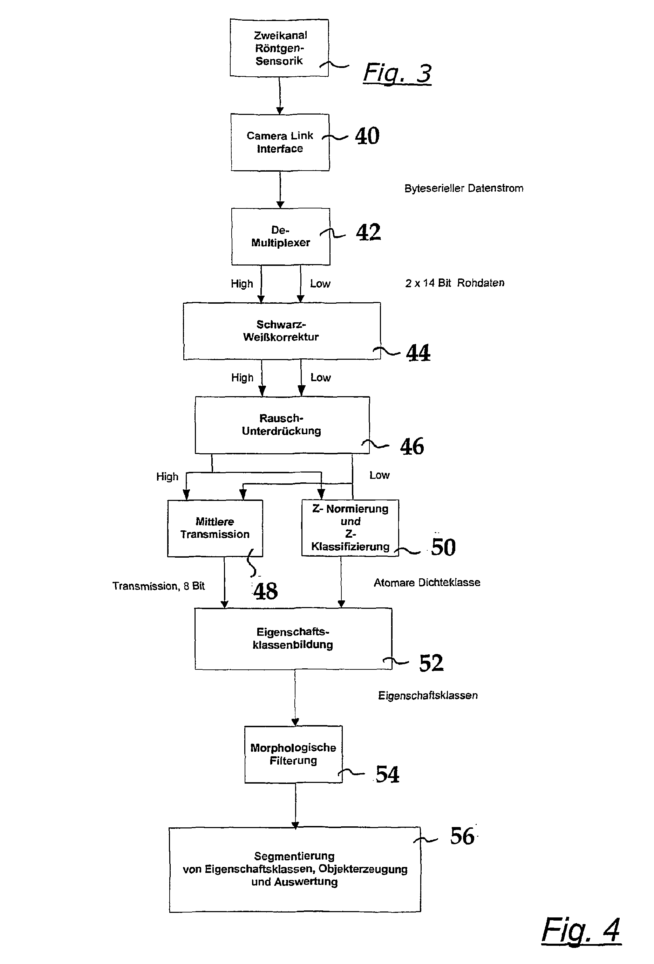

Ein typisches Array hat 64 Pixel (in einer Reihe) mit wahlweise 0,4 mm oder 0,8 mm Pixelraster. Wie in **Fig. 3** schematisch dargestellt wird über Analogverstärker und Analog/Digital-Wandler 32 die Intensität mit 14-Bit Dynamik digitalisiert und über FIFO (First In / First Out-) Speicher 34 und eine serielles Interface 36 zeilensynchron ausgelesen. Hierbei wird die Zeile, die gegeben durch die Förderrichtung des Materials zuerst von dem Sortiergut geschnitten wird, solange verzögert, dass die Daten quasi gleichzeitig mit denen der später geschnittenen Zeile (mit dem anderen Energiespektrum) zur Verfügung stehen.

Die so zeitlich korrelierten Daten werden durch den Multiplexer 38 in einen byteseriellen Datenstrom gewandelt und über die Standardschnittstelle Camera Link 40 über mehrere Meter Entfernung zur Auswerteelektronik übertragen.

Durch Aneinanderreihen von Elektronikmodulen, die jeweils 300 mm Förderbreite abdecken, können maximale Förderbreiten von 1800mm zweikanalig aufgebaut werden. Zu diesem Zweck werden auf jedem Modul die erforderlichen Betriebspannungen neu erzeugt und die Taktsignale erneut aufbereitet.

Die eigentliche Röntgensignalverarbeitung findet dann (wie in **Fig. 4** schematisch dargestellt) an dem über Camera Link 40 übertragenen Datenstrom statt, der zunächst über den Demultiplexer 42 wieder in die zwei Sensorkanäle aufgetrennt wird.

Für jeden Kanal getrennt wird nun eine Schwarz / Weiß-Korrektur in einer Elektronikeinheit 44 durchgeführt. Beim Einmessen dieser Korrekturstufe wird für jeden Pixel der Schwarzwert bei Abwesenheit von Strahlung sowie der Weißwert bei 100% Strahlung bestimmt und eine Abgleichtabelle angelegt. Im Normalbetrieb werden die Rohdaten mit Hilfe der Abgleichtabelle korrigiert.

Zur Unterdrückung von Signalrauschen (Baueinheit 46) wird getrennt für jeden Kanal durch Zwischenspeichen von einigen aufeinanderfolgenden Zeilen temporär ein Bild aufgebaut. Dieses Bild wird durch ein Mittelwertfilter, dessen Größe in Zeilen und Spalten einstellbar ist, geglättet. Hierbei wird das Rauschen signifikant reduziert.

Die Z-Transformation (Baueinheit 50) erzeugt aus den Intensitäten zweier Kanäle unterschiedlicher spektraler Abbildung n Klassen mittlerer atomarer Dichte (abgekürzt Z), deren Zuordnung weitestgehend unabhängig von der Röntgentransmission und somit von der Materialstärke ist.

Eine Normierung der Werte auf eine mittlere atomare Dichte eines oder mehrerer ausgewählter repräsentativer Werkstoffe erlaubt es, Bildbereiches diesseits und jenseits der Normkurve verschieden zu klassifizieren. Eine derartige Kalibrierung bei der über das aufgefangene Spektrum jeweils nicht-linear der Zusammenhang hergestellt wird, erlaubt es apparative Effekte "auzublenden".

Die bei der Normierung auf ein bestimmtes Z (Ordungszahl eines Elementes, oder allgemeiner mittlere atomare Dichte des Materials) generierte atomare Dichteklasse bildet hierbei die typische Dichte der beteiligten Materialien ab. Parallel dazu wird in Baueinheit 48 ein weiterer Kanal berechnet, der die resultierende (mittlere) Transmission über das gesamte Spektrum bereitstellt.

Durch rechnergestützte Kombination der atomaren Dichteklasse mit einem Transmissionsintervall (Tₘᵢₙ..Tₘₐₓ) kann den Pixeln eine Eigenschaftsklasse in Baueinheit 52 zugewiesen werden, die schließlich nach einer morphologischen Filterung 54 zur Materialunterscheidung in Baueinheit 56 herangezogen wird.

Auch hier wird temporär ein Bild von einigen Zeilen Höhe aufgebaut, um mit eine zweidimensionalen Filter Störinformationen zu unterdrücken. Es können z.B. unerwünschte Fehlinformationen am Rand der Partikel durch angeschnittene Pixel unterdrückt werden.

Der Datenstrom von Eigenschaftsklassen wird behandelt wie Bildmaterial. Die Eigenschaftsklasse "Maschinenleerlauf" beschreibt den Zustand bei eingeschalteter Röntgenquelle ohne Sortiergut in der Messstrecke. Alle von dem Maschinenleerlauf abweichenden Eigenschaftspixel werden als Vordergrund behandelt und durch die Segmentierung zu Zeilensegmenten und schließlich zu Flächen zusammengefasst. Die Eigenschaftsverteilung über diese Flächen wird durch Objektdatensätze beschrieben. Ferner enthalten diese Datensätze auch Informationen über Position Form und Größe der zusammenhängenden Eigenschaftsflächen.

In der Auswertung werden Mengenrelationen der Eigenschaftspixel sowie Form und Größe je Objekt mit gelernten Kenngrößen je Material verglichen. Das Objekt wird auf dieser Basis einer bestimmten Materialklasse zugeordnet.

## Patentansprüche

1. Vorrichtung zur Trennung von Schüttgütern mit Hilfe einer Ausblaseinrichtung mit an einer einem Förderband (20) nachgeordneten Fallstrecke angeordneten Ausblasdüsen, mit einer Röntgenquelle, rechnergesteuerten Auswertemitteln und Sensormitteln (10)
wobei die Ausblasdüsen von den rechnergestützten Auswertemitteln in Abhängigkeit von Sensorsignalen ansteuerbar sind, die aus einer den Schüttgutstrom auf dem Förderband durchdringenden, aus der Röntgenquelle emittierten und in den Sensormitteln aufgefangenen Strahlung resultieren, wobei
- wenigstens zwei Filtereinrichtungen zum Passierenlassen von Röntgenstrahlung in Relation zueinander unterschiedlicher Energiespektren, die vor dem wenigstens einen Sensormittel (10) angeordnet sind,
- Zeilensensoren mit einer Vielzahl von quer zu dem Förderband (20) angeordneten einzelnen Pixeln als Sensormittel, wobei zu jedem Filter eine Sensorzeile vorgesehen ist.

2. Vorrichtung nach Anspruch 1, **dadurch gekennzeichnet, daß** eine der Breite des Förderbandes entsprechende Sensorzeile durch aneinandergereihte Photodiodenarrays, deren aktive Fläche mit einem fluoreszierenden Papier bedeckt ist, gebildet wird.

3. Vorrichtung nach einem der vorangehenden Ansprüche, **dadurch gekennzeichnet, daß** die Filter Metallfolien sind, durch die Röntgenstrahlung zueinander unterschiedliche Energieniveaus transmittiert.

4. Vorrichtung nach einem der vorangehenden Ansprüche, **dadurch gekennzeichnet, daß** die Filter unterhalb des Transportbandes (20) vor den Sensoren angeordnet sind, und eine ein Bremsspektrum erzeugende Röntgenröhre (12) oberhalb des Förderbandes (20) angeordnet ist.

5. Vorrichtung nach einem der vorangehenden Ansprüche, **dadurch gekennzeichnet, daß** die Vorrichtung mit einem Abschirmkasten (14) im wesentlichen oberhalb des Förderbandes (20) versehen ist, der das Förderband (20) und die Ausblasstrecke (22) umgibt, als Abdeckung (16) das Förderband eine Strecke vor der Röntgenquelle abdeckt, wobei am Beginn des Laufbands eine schräge Schütte (18) den Eingangsquerschnitt abdeckt.

6. Vorrichtung nach einem der vorangehenden Ansprüche, **dadurch gekennzeichnet, daß** mehr als zwei Filter zur Nutzung von mehr als zwei Energieniveaus vorgesehen sind.

7. Verfahren zur Trennung von Schüttgütern mit Hilfe einer Ausblaseinrichtung mit an einer einem Förderband (20) nachgeordneten Fallstrecke angeordneten Ausblasdüsen, wobei die Ausblasdüsen von rechnergestützten Auswertemitteln in Abhängigkeit von Sensorergebnissen einer, den Schüttgutstrom auf dem Förderband durchdringenden, aus einer Röntgenquelle emittierten und in Sensormitteln aufgefangenen Strahlung gesteuert werden, **gekennzeichnet durch**
Filtern der die Schüttgutteilchen passierten Röntgenstrahlung in wenigstens zwei **durch** den Einsatz von Metallfolien gefilterten unterschiedlichen Spektren zum ortsaufgelösten Auffangen der die Schüttgutteilchen passierenden Röntgenstrahlung in wenigstens einem Zeilensensor zu jedem Filter integriert über einen vorbestimmten Energiebereich.

8. Verfahren nach Anspruch 7, **dadurch gekennzeichnet, daß** eine Z-Klassifizierung und Normierung von Bildbereichen zur Bestimmung der atomaren Dichteklasse aufgrund der Sensorsignale der in den wenigstens zwei Sensorzeilen aufgefangenen Röntgenphotonen unterschiedlicher Energiespektren erfolgt.

9. Verfahren nach Anspruch 7 oder 8, **dadurch gekennzeichnet, daß** eine Segmentierung der Eigenschaftsklassenbildung zur Steuerung der Ausblasdüsen auf der Grundlage sowohl der erfassten mittleren Transmission der Schüttgutteilchen in den durch die wenigstens zwei Sensorzeilen aufgefangenen unterschiedlicher Röntgenenergiespektren als auch der durch eine Z-Normierung gewonnenen Dichteinformation erfolgt.

## Claims

1. A device for the separation of bulk goods by means of an exhaust device with exhaust jets coordinated with a gravity drop that is subordinated to a conveyor belt (20), with a source of X-rays, computer supported evaluation equipment and sensors (10)
where the exhaust jets are controlled by computer supported evaluation equipment dependent on sensor signals resulting from radiation which is emitted from an X-ray source and penetrates the flow of bulk goods on the conveyor belt and which is intercepted by the sensor equipment, where
- at least two filter devices are fitted to permit the X-radiation to pass in relation to energy spectra which differ from each other and which are located in front of at least one sensor means (10),
- line sensors with a great number of individual pixels arranged diagonally to the conveyor belt (20) where one sensor line is provided for each filter.

2. A device in accordance with Claim 1 and identified by the fact that a sensor line corresponding to the width of the conveyor belt is formed from photodiode arrays arranged next to each other, the active surface of which is covered by a fluorescent paper.

3. A device in accordance with the previous claims and identified by the fact that the filters are metal foils through which the X-radiation transmits energy levels which differ from each other.

4. A device in accordance with one of the previous claims and identified by the fact that the filters are arranged below transportation belt (20) in front of the sensors and an X-ray tube (12) producing a brake spectrum is fitted above conveyor belt (20).

5. A device in accordance with one of the previous claims and identified by the fact that the device is provided with a shield box (14) essentially above conveyor belt (20), which surrounds conveyor belt (20) and exhaust section (22) and as shield (16) covers a length of the conveyor belt in front of the X-ray source, where a diagonal container (18) covers the input cross sectional area at the beginning of the conveyor belt.

6. A device in accordance with one of the previous claims and identified by the fact that more than two filters are provided for the use of more than two energy levels.

7. A device for the separation of bulk goods by means of an exhaust device with exhaust jets coordinated with a gravity drop that is subordinated to a conveyor belt (20), where the exhaust jets are controlled by computer supported evaluation equipment dependent on sensor results from radiation which penetrates the flow of bulk goods on the conveyor belt, is emitted from an X-ray source and which is intercepted by the sensor equipment, **characterized in that**
the filtering of the X-radiation which is passed through the bulk goods particles takes place on at least two different spectra filtered by using metal foils in order to intercept the locally dissolved X-radiation passing through the bulk goods particles in at least one line sensor for each filter integrated above a predetermined area of energy.

8. A procedure in accordance with Claim 7 and identified by the fact that a Z classification and standardisation of the image ranges is made in order to determine the class of atomic density on the basis of the sensor signals of the X-ray photons of different energy spectra intercepted by at least two of the sensor lines.

9. A procedure in accordance with Claim 7 or 8 and identified by the fact that a segmentation is made of the formation of a classification of properties in order to control the exhaust jets on the basis of both the average transmission of the bulk goods particles obtained in the different X-ray energy spectra intercepted by at least two sensor lines and the information on density obtained by a Z standardisation.

## Revendications

1. Dispositif pour séparer des matières en vrac à l'aide d'un équipement de soufflage avec des buses de soufflage disposées sur une section de chute faisant suite à une bande transporteuse (20), avec une source de rayons X, des moyens d'évaluation assistés par ordinateur et des moyens de détection (10),
dans lequel les buses de soufflage peuvent être commandées par les moyens d'évaluation assistés par ordinateur en fonction de signaux de capteurs qui résultent d'un rayonnement traversant le flux de matières en vrac sur la bande transporteuse, émis par la source de rayons X et capté dans les moyens de détection, sachant
- qu'au moins deux dispositifs de filtrage pour laisser passer le rayonnement X de spectres d'énergie différents en relation mutuelle sont disposés avant ledit au moins un moyen de détection (10),
- qu'il est prévu des capteurs en ligne avec une pluralité de pixels individuels disposés transversalement à la bande transporteuse (20) en tant que moyens de détection, une ligne de détection étant prévue pour chaque filtre.

2. Dispositif selon la revendication 1, **caractérisé en ce qu'**une ligne de détection correspondant à la largeur de la bande transporteuse est formée par des réseaux de photodiodes alignés dont la surface active est recouverte d'un papier fluorescent.

3. Dispositif selon l'une des revendications précédentes, **caractérisé en ce que** les filtres sont des feuilles métalliques à travers lesquelles des rayonnements X de niveaux d'énergie différents l'un de l'autre sont transmis.

4. Dispositif selon l'une des revendications précédentes, **caractérisé en ce que** les filtres sont disposés avant les capteurs sous la bande transporteuse (20) et qu'un tube à rayons X (12) générant un spectre de freinage est disposé au-dessus de la bande transporteuse (20).

5. Dispositif selon l'une des revendications précédentes, **caractérisé en ce que** le dispositif est pourvu d'un caisson de blindage (14) essentiellement au-dessus de la bande transporteuse (20), qui entoure la bande transporteuse (20) et la section de soufflage (22), recouvre en tant que recouvrement (16) la bande transporteuse une section avant la source de rayons X, une glissière inclinée (18) recouvrant la section transversale d'entrée au début de la bande transporteuse.

6. Dispositif selon l'une des revendications précédentes, **caractérisé en ce qu'**il est prévu plus de deux filtres pour l'utilisation de plus de deux niveaux d'énergie.

7. Procédé pour séparer des matières en vrac à l'aide d'un équipement de soufflage avec des buses de soufflage disposées sur une section de chute faisant suite à une bande transporteuse (20), dans lequel les buses de soufflage peuvent être commandées par des moyens d'évaluation assistés par ordinateur en fonction de résultats de capteurs d'un rayonnement traversant le flux de matières en vrac sur la bande transporteuse, émis par une source de rayons X et capté dans des moyens de détection, **caractérisé par**
filtrage du rayonnement X passant à travers les particules de matière en vrac en au moins deux spectres différents filtrés par l'utilisation de feuilles métalliques pour capter à haute résolution spatiale le rayonnement X passant à travers les particules de matière en vrac dans au moins un capteur en ligne pour chaque filtre, intégré sur un domaine d'énergie prédéterminé.

8. Procédé selon la revendication 7, **caractérisé en ce que** l'on réalise une classification et une normalisation Z de régions d'images pour déterminer la classe de densité atomique sur la base des signaux de capteurs des photons X de spectres d'énergie différents captés dans les au moins deux lignes de détection.

9. Procédé selon la revendication 7 ou 8, **caractérisé en ce que** l'on réalise une segmentation de la formation de classes de propriété pour commander les buses de soufflage sur la base aussi bien de la transmission moyenne saisie des particules de matière en vrac dans les spectres d'énergie X différents captés par les au moins deux lignes de détection que de l'information de densité obtenue par une normalisation Z.
